# FASCICULE DE BREVET EUROPEEN

(11) **EP 1 842 352 B1**
(45) Date de publication et mention de la délivrance du brevet: **27.06.2018**
(21) Numéro de dépôt: 06709423.5
(22) Date de dépôt: 23.01.2006
(51) Int. Cl.: H04L 29/08

(54) **SYSTEME ET PROCEDE POUR ETABLIR UNE RELATION DE TYPE CLIENT/SERVEUR DANS UN RESEAU PAIR A PAIR**
SYSTEM UND VERFAHREN ZUR HERSTELLUNG EINER BEZIEHUNG DES CLIENT/SERVER-TYPS IN EINEM PAIR-TO-PAIR-NETZWERK
SYSTEM AND METHOD FOR ESTABLISHMENT OF A CLIENT/SERVER TYPE RELATIONSHIP IN A PAIR-TO-PAIR NETWORK

(30) Priorité: 24.01.2005 FR 0500694
(43) Date de publication de la demande: 10.10.2007
(73) Titulaire: Orange, 75015 Paris (FR)
(72) Inventeur: LE MERRER, Erwan, F-22730 Tregastel (FR); NEVEUX, Didier, F-22140 Cavan (FR); HOUDOIN, Thierry, F-22560 Pleumeur Bodou (FR)
(74) Mandataire: Delumeau, François Guy
(86) Numéro de dépôt international: PCT/FR2006/050038
(87) Numéro de publication internationale: WO 2006/077354

(56) Documents cités:
- WO-A-03/024021
- WO-A1-2005/006711
- US-A1- 2003 126 245
- US-A1- 2004 098 370
- BEVERLY YANG ET AL: "Improving search in peer-to-peer networks" PROCEEDINGS OF THE 22ND. INTERNATIONAL CONFERENCE ON DISTRIBUTED COMPUTING SYSTEMS. ICDCS 2002. VIENNA, AUSTRIA, JULY 2 - 5, 2002, INTERNATIONAL CONFERENCE ON DISTRIBUTED COMPUTING SYSTEMS, LOS ALAMITOS, CA : IEEE COMP. SOC, US, vol. CONF. 22, 2 juillet 2002 (2002-07-02), pages 1-10, XP010595511 ISBN: 0-7695-1585-1
- YANG B ET AL INSTITUTE OF ELECTRICAL AND ELECTRONICS ENGINEERS: "Designing a super-peer network" PROCEEDINGS 19TH. INTERNATIONAL CONFERENCE ON DATA ENGINEERING. (ICDE'2003). BANGALORE, INDIA, MARCH 5 - 8, 2003, INTERNATIONAL CONFERENCE ON DATA ENGINEERING. (ICDE), NEW YORK, NY : IEEE, US, vol. CONF. 19, 5 mars 2003 (2003-03-05), pages 49-60, XP010678728 ISBN: 0-7803-7665-X
- SCHAEFFER A E ET AL: "PerDiS: A Scalable Resource Discovery Service for the ISAM Pervasive Environment" PEER-TO-PEER SYSTEMS, 2004. INTERNATIONAL WORKSHOP ON HOT TOPICS IN VOLENDAM, THE NETHERLANDS 08-08 OCT. 2004, PISCATAWAY, NJ, USA,IEEE, 8 octobre 2004 (2004-10-08), pages 80-85, XP010770020 ISBN: 0-7695-2269-6
- SINGH K ET AL: "Peer-to-Peer Internet Telephony using SIP" DEPARTMENT OF COMPUTER SCIENCE, COLUMBIA UNIVERSITY, 31 octobre 2004 (2004-10-31), XP002336408

## Description

### Arrière-plan de l'invention

La présente invention se rapporte à un procédé de communication dans un réseau de pairs.

On rappelle à cet effet qu'un réseau de pairs est un réseau dans lequel chaque station (dénommée "pair", en anglais "peer") a des capacités et responsabilités équivalentes. Ce concept diffère de l'architecture client/serveur traditionnelle dans laquelle un petit nombre de stations sont destinées à servir les autres. En particulier, chaque pair doit être capable de découvrir les autres. Tous les pairs peuvent ainsi s'organiser en groupe de pairs, communiquer entre eux, publier et découvrir des ressources réseaux.

Plus particulièrement, l'invention se place dans le contexte des réseaux de pairs de type hybride.

Ce type de réseaux définit des super pairs, élus parmi les pairs, qui jouent le rôle de serveurs pour les pairs simples auxquels ils sont connectés, par exemple pour indexer les ressources, initier les recherches, et réduire le trafic sur le réseau.

Pour plus de renseignements sur l'architecture conventionnelle pair à pair hybride, l'homme du métier pourra se reporter au document publié sur Internet à l'adresse http://www.grouter.net/gnutella/search.htm.

De façon connue, (voir par exemple les demandes de brevet US2003/126245 A1, US2004/098370 A1 et WO2005/006711 A1), les réseaux de pairs actuels sont principalement utilisés pour le partage de fichiers. De tels réseaux, bien que de plus en plus populaires, ne permettent cependant pas de garantir qu'une ressource (en l'occurrence un fichier) soit disponible en permanence sur ce réseau. Ceci vient principalement du fait que la topologie d'un réseau de pairs est dynamique, puisque constituée de dispositifs s'y raccordant au gré de leurs besoins ou de leurs possibilités.

A fortiori, les réseaux pair à pair connus à ce jour ne permettent pas à un opérateur de télécommunication d'offrir une fonctionnalité pouvant être rendue par différents pairs du réseau avec une disponibilité équivalente à celle d'un système centralisé traditionnel.

### Objet et résumé de l'invention

La présente invention a pour but principal de pallier les inconvénients précités. L'invention est définie par les revendications de dispositif 1 et 6, la revendication de procédé 10, et les revendications de programme et de support informatiques 12 et 13. A cet effet, et selon un premier aspect, elle concerne un premier dispositif, ce dispositif pouvant, dans un réseau pair à pair hybride, être utilisé en tant que super pair pour au moins un pair, ce dispositif comportant :
- des moyens pour identifier les pairs actifs du réseau mettant en oeuvre une fonctionnalité prédéterminée ;
- des moyens d'envoi, à destination d'un pair du réseau, d'une requête pour demander à ce pair de mettre en oeuvre la fonctionnalité ;
- des moyens d'établissement d'une liste de pairs actifs mettant en oeuvre la fonctionnalité ; et
- des moyens d'envoi de la liste à au moins un de ses pairs.

Ainsi, le super pair conforme à l'invention est adapté à forcer les pairs du réseau à mettre en oeuvre la fonctionnalité, de façon à garantir, statistiquement, qu'à tout moment au moins un nombre minimum de pairs du réseau mettent en oeuvre cette fonctionnalité.

Sur réception de la liste des pairs actifs, un pair du réseau peut contacter un pair actif figurant dans cette liste, selon un schéma classique de type client/serveur.

Le mécanisme précédent permet donc de garantir qu'à tout moment au moins un pair actif du réseau offre la fonctionnalité prédéterminée.

En pratique, chaque super pair interroge directement et régulièrement ses pairs pour vérifier s'ils sont actifs et mettent en oeuvre la fonctionnalité.

Afin d'identifier les pairs actifs gérés par les autres super pairs, chaque super pair comporte préférentiellement des moyens pour interroger les autres super pairs du réseau avec une profondeur croissante.

Ainsi par exemple, un super pair peut interroger les super pairs voisins à trois bonds, et dans le cas où il n'obtient pas, de ces super pairs, l'identifiant d'un pair actif offrant la fonctionnalité prédéterminée, établir une nouvelle requête, par exemple à six bonds. On homogénéise ainsi la répartition des fonctions dans le réseau et on limite le temps de réponse.

Dans un mode préféré de réalisation, le dispositif super pair selon l'invention comporte des moyens d'obtention de la charge des pairs mettant en oeuvre la fonctionnalité, et des moyens pour ordonner la liste précitée selon un ordre permettant d'équilibrer la charge entre ces pairs.

En pratique, chaque super pair peut obtenir directement la charge de ses pairs, et obtenir la charge des autres pairs en interrogeant les super pairs auxquels il est raccordé.

On peut ainsi définir un seuil maximum de charge, en fonction des ressources d'un pair, pour chaque type de fonctionnalité du réseau. Le super pair peut ensuite répartir la charge entre les différents pairs, de façon dynamique, en privilégiant, dans la liste, les pairs offrant la fonctionnalité avec la plus faible charge.

En variante, les super pairs peuvent établir la liste en faisant varier la charge de façon statique, à savoir en générant une liste tournante, ou ordonnée aléatoirement, sachant que les pairs inscrits en haut de la liste seront sollicités en premier lieu.

Dans un mode préféré de réalisation, les super pairs comportent :
- des moyens d'envoi, à destination d'au moins un de leurs pairs, d'une requête d'élection en super pair ; et
- des moyens pour demander, à au moins un de leurs pairs, de se connecter auprès du super pair ainsi élu.

Cette caractéristique permet avantageusement de répartir la charge entre les super pairs.

Plus précisément, lorsqu'un pair ne parvient pas à se connecter à un super pair du réseau pour cause de charge des super pairs, un super pair peut accepter temporairement la connexion à ce pair, imposer la création d'un super pair puis imposer à ce super pair voisin d'établir des connexions avec, par exemple, la moitié des pairs auxquels il est connecté, assurant ainsi une répartition de charge du trafic au sein du réseau de pairs.

Selon un deuxième aspect, l'invention concerne un deuxième dispositif, ce dispositif pouvant être utilisé en tant que pair dans un réseau pair à pair hybride. Ce dispositif comporte :
- des moyens d'obtention d'une fonctionnalité prédéterminée sur réception d'une requête ; et
- des moyens pour mettre en oeuvre la fonctionnalité au service des pairs du réseau.

Un tel pair permet ainsi d'assurer la persistance du service au sein du réseau, en offrant, à la demande, la fonctionnalité prédéterminée.

Ainsi les fonctions prédéterminées peuvent être installées résidentes dans le pair, désactivées par défaut, et susceptibles d'être activées sur réception d'une requête en provenance, par exemple, du super pair de ce pair ou d'un serveur central.

Dans une autre variante de réalisation, les pairs sont adaptés à télécharger la fonctionnalité depuis un pair du réseau faisant fonction de serveur de mise à jour logiciel, ou depuis un pair du réseau hébergeant la fonctionnalité, activée ou non, ou en cours d'acquisition de cette fonctionnalité.

Cette caractéristique peut aussi être utilisée pour mettre à jour une nouvelle version de la fonction prédéterminée. Dans ce mode de réalisation, les super pairs peuvent progressivement retirer de leur liste les pairs dont la fonctionnalité n'est plus à jour, qui, avisés de cet état, obtiennent la nouvelle version de la fonctionnalité auprès du serveur de mise à jour ou auprès d'un pair déjà à jour ou en cours de mise à jour.

Plusieurs modes de réalisation sont envisageables :
Selon un premier mode, les pairs se mettent temporairement en indisponibilité vis-à-vis des autres pairs, le temps du téléchargement de la fonctionnalité.

Dans un deuxième mode de réalisation, on procède au chargement dynamique de plugin sans qu'il soit nécessaire d'interrompre le service rendu. Dans ce mode de réalisation, le système d'exploitation et le langage de programmation doivent le permettre (JAVA, C++,...).

Dans un mode préféré de réalisation, les pairs selon l'invention comportent des moyens de notification, à un serveur central, de la mise à disposition de leur fonctionnalité.

Ce serveur central, typiquement maintenu par un opérateur de télécommunication, a la connaissance des statistiques moyennes d'utilisation de la fonction prédéterminée à un moment donné.

Ce serveur connaît donc ainsi en temps réel le nombre effectif de chaque fonctionnalité présente sur le réseau de pairs et peut ainsi solliciter la création ou la suppression de fonctionnalité en fonction de la charge du réseau, de la date, de l'heure,...

Dans une autre variante de réalisation, les systèmes pairs sont adaptés à envoyer, à destination de son super pair, un message représentatif de sa charge de calcul.

Comme brièvement mentionné ci-dessus, ce message peut être pris en compte par le super pair pour ordonner la liste des super pairs offrant la fonctionnalité, de façon à répartir la charge au sein du réseau.

Dans un mode préféré de réalisation, le pair selon l'invention est constitué par une passerelle résidentielle d'accès au réseau Internet (en anglais Home Gateway).

Ces passerelles résidentielles, qui présentent l'avantage d'être reliées en permanence au réseau physique, permettent ainsi d'améliorer considérablement la persistance du service, la déconnexion d'une de ces passerelles étant principalement due à des besoins de maintenance, par nature bien moins fréquents.

Selon un troisième aspect, l'invention concerne un système de mise en relation, dans un réseau pair à pair hybride, d'un premier pair avec un deuxième pair mettant en oeuvre une fonctionnalité prédéterminée. Ce système comporte :
- au moins un pair tel que mentionné ci-dessus et mettant en oeuvre cette fonctionnalité ;
- un deuxième dispositif tel que mentionné brièvement ci-dessus, utilisé en tant que super pair du premier pair, et adapté à :
- obtenir la liste des pairs du réseau mettant en oeuvre la fonctionnalité ;
- envoyer une requête à un pair du réseau pour lui demander de mettre en oeuvre la fonctionnalité ; et
- envoyer la liste au premier pair.

Le premier pair est adapté à sélectionner le deuxième pair parmi les pairs de la liste et à établir une relation de type client/serveur avec ce deuxième pair.

L'invention permet ainsi d'établir une relation de type client/serveur dans un réseau de pairs avec une performance équivalente à celle obtenue par une architecture conventionnelle de type client/serveur.

Dans un mode préféré de réalisation, le système selon l'invention comporte en outre un serveur central adapté à recevoir des messages de notification, en provenance des pairs du réseau, représentatifs de la mise à disposition de la fonctionnalité par ces pairs, et des moyens d'envoi, à destination d'un pair du réseau, d'une requête pour lui demander de mettre en oeuvre la fonctionnalité.

Ce serveur central permet, comme décrit précédemment, d'assurer un calibrage statique du nombre de pairs devant mettre en oeuvre la fonction prédéterminée.

L'invention peut notamment être utilisée pour déployer, dans un réseau de pairs, des fonctions de téléphonie conformes au protocole SIP, par exemple pour réaliser un commutateur (PABX) distribué sur le réseau de pairs.

Pour plus de renseignements sur le protocole SIP, l'homme du métier pourra se reporter au document RFC 3261 défini par l'IETF (Internet Engineering Task Force).

En particulier, l'invention permet d'implémenter, dans des pairs du réseau de pairs hybride, la fonction registrar du protocole SIP.

Dans ce mode de réalisation de l'invention, le super pair obtient la liste des pairs du réseau offrant la fonction registrar. Il est adapté à envoyer une requête à un pair du réseau pour lui demander d'obtenir cette fonction et à envoyer la liste précitée à l'un de ses pairs hébergeant un client SIP.

L'invention permet aussi d'implémenter la fonction proxy SIP dans des pairs du réseau, le super pair étant dans ce cas adapté à maintenir une liste des pairs mettant en oeuvre la fonction proxy et à envoyer une requête à un pair pour lui demander d'obtenir la fonction proxy au besoin.

Selon une implémentation préférée, le pair et le super pair selon l'invention sont des dispositifs électroniques conventionnels (ordinateurs, passerelles,...) mettant en oeuvre un procédé dont les différentes étapes sont déterminées par des instructions de programmes d'ordinateurs.

En conséquence, l'invention vise aussi un procédé d'offre de services pouvant être mis en oeuvre par un pair dans un réseau pair à pair hybride. Ce procédé comporte :
- une étape de réception d'une requête pour obtenir une fonctionnalité prédéterminée ;
- une étape d'obtention de la fonctionnalité ; et
- une étape de mise en oeuvre de la fonctionnalité.

L'invention concerne aussi un programme d'ordinateur stocké sur un support d'informations, ce programme comportant des instructions permettant la mise en oeuvre du procédé d'offre de service précité, lorsque ce programme est chargé et exécuté par un système informatique.

L'invention vise également un support d'information lisible par un dispositif utilisé comme pair dans un réseau de pairs comportant les instructions du programme d'ordinateur mentionné ci-dessus.

De la même façon, l'invention vise aussi un procédé de mise en relation pouvant être exécuté par un super pair dans un réseau pair à pair hybride. Ce procédé comporte :
- une étape d'identification des pairs actifs du réseau offrant une fonctionnalité prédéterminée ;
- une étape d'envoi, à destination d'un pair du réseau, d'une requête pour lui demander de mettre en oeuvre la fonctionnalité ;
- une étape d'établissement d'une liste de pairs actifs mettant en oeuvre la fonctionnalité ; et
- une étape d'envoi de la liste à au moins un de ses pairs.

L'invention vise aussi un programme d'ordinateur stocké sur un support d'informations, ce programme comportant les instructions permettant la mise en oeuvre d'un procédé de mise en relation tel que précité lorsque ce programme est chargé exécuté par un système informatique.

L'invention vise également un support d'informations lisible par un dispositif utilisé comme super pair dans un réseau de pairs et comportant des instructions d'un programme d'ordinateur tel que mentionné ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations peuvent être n'importe quelle entité ou dispositif capable de stocker le programme. Par exemple, ils peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, ces supports d'informations peuvent être constitués par un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'informations peuvent être constitués par un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de mise en relation conforme à l'invention dans un mode préféré de réalisation ;
- la figure 2 représente, sous forme d'organigramme, les principales étapes d'un procédé d'offre de services conforme à l'invention dans un mode préféré de réalisation ;
- la figure 3 représente, sous forme d'organigramme, les principales étapes d'un procédé de mise en relation conforme à l'invention dans un mode préféré de réalisation ;
- la figure 4 représente une utilisation de l'invention pour réaliser la fonction registrar de la norme SIP ;
- la figure 5 représente l'utilisation de l'invention pour réaliser la fonction proxy SIP ; et
- les figures 6A et 6B représentent une caractéristique avantageuse de répartition de charges pouvant être mise en oeuvre par un super pair conforme à l'invention ;

### Description détaillée d'un mode de réalisation

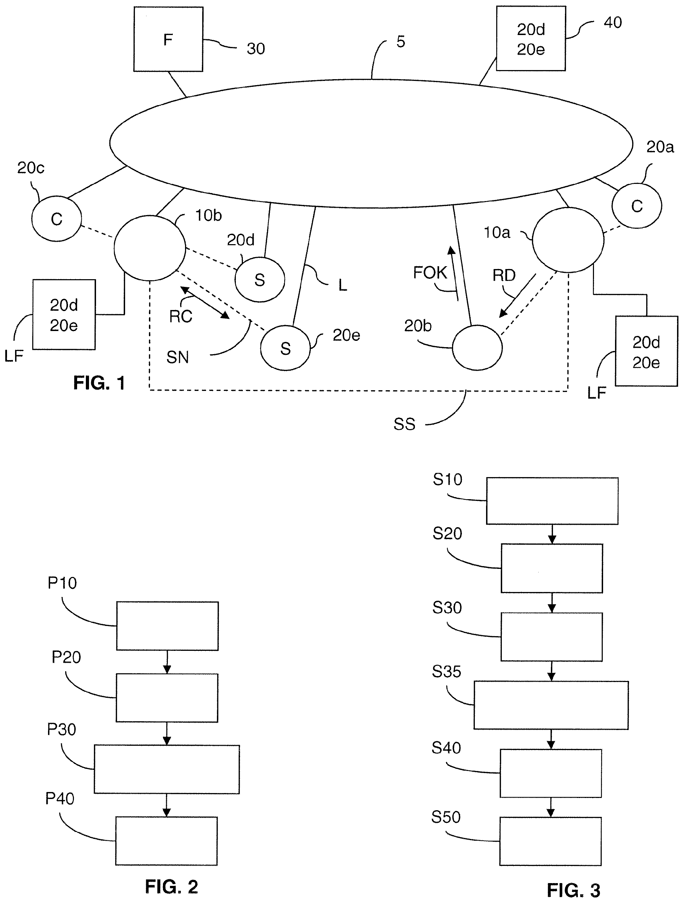

La **figure 1** représente un réseau Internet 5 sur lequel sont connectés différents équipements au moyen de liaisons L schématisées par des traits pleins.

On supposera que des équipements 10x, 20x de ce réseau Internet 5 se sont organisés selon une architecture de réseaux de pairs hybrides.

Plus précisément, on supposera que les dispositifs 10a et 10b ont été élus super pairs, et que :
- le super pair 10a gère les deux pairs 20a et 20b ; et que
- le super pair 10b gère les pairs 20c, 20d et 20e.

Les liaisons établies au sein du réseau de pairs sont représentées en traits tiretés sur cette figure.

Plus précisément, les liaisons établies entre un super pair et l'un de ses pairs sont référencées SN, et les liaisons établies entre des super pairs sont référencées SS.

On supposera qu'un premier pair 20a du réseau souhaite accéder à une fonctionnalité prédéterminée F.

A cet effet, selon la présente invention, le super pair 10a du pair 20a maintient à jour une liste LF des pairs actifs dans le réseau de pairs mettant en oeuvre la fonctionnalité prédéterminée F.

A cet effet, le super pair 10a exécute un programme informatique mettant en oeuvre les étapes S10 à S50 représentées sur l'organigramme de la **figure 3****.**

Ce programme informatique comporte deux premières étapes S10 et S20 permettant au super pair 10a d'identifier les pairs actifs mettant en oeuvre cette fonctionnalité F.

Plus précisément, au cours d'une première étape S10, le super pair 10a interroge les autres super pairs 10b du réseau de pairs pour obtenir la liste des pairs actifs offrant la fonctionnalité F connue de ses autres super pairs 10b.

Préférentiellement, cette étape d'interrogation peut être effectuée en interrogeant les autres super pairs avec une profondeur croissante.

On rappelle que dans un réseau de pairs, la profondeur séparant deux pairs 10a, 10b est le nombre de bonds qu'il faut effectuer pour atteindre le pair 10b en partant du pair 10a. En l'occurrence, sur la figure 1, le super pair 10b est distant d'un bond du super pair 10a (profondeur 1).

Ainsi, si au cours de l'étape S10, réalisée dans un premier temps par exemple avec trois bonds, le super pair 10a considère qu'il n'a pas identifié suffisamment de pairs actifs mettant en oeuvre la fonctionnalité F, il peut interroger à nouveau les super pairs avec une profondeur supérieure, par exemple six bonds.

Dans l'exemple de la figure 1, le super pair 10a reçoit, du super pair 10b, une liste LF contenant les identifiants des pairs 20d et 20e.

L'étape S10 d'interrogation des super pairs est suivie par une étape S20 au cours de laquelle le super pair 10a identifie, parmi ses pairs 20a, 20b, les pairs actifs mettant en oeuvre la fonctionnalité F.

Dans cet exemple, aucun des pairs 20a, 20b connectés au super pair 10a ne met en oeuvre la fonctionnalité F.

Lorsqu'à l'issue de ces étapes d'identification S10, S20, le super pair 10a considère que le nombre de pairs actifs mettant en oeuvre la fonctionnalité F est insuffisant, il envoie, au cours d'une étape S30, une requête RD à un pair du réseau pour le forcer à mettre en oeuvre cette fonctionnalité.

En limitant la profondeur de recherche, on assure ainsi une répartition homogène des fonctionnalités dans le réseau de pairs.

Dans l'exemple décrit ici, on supposera que cette requête RD est envoyée au pair 20b attaché au super pair 10a.

Dans ce mode préféré de réalisation, le pair 20b exécute un programme d'ordinateur mettant en oeuvre un procédé d'offre de service dont les principales étapes P10 à P40 sont représentées à la **figure 2****.**

Au cours d'une première étape P10, le pair 20b reçoit la requête RD en provenance de son super pair 10a.

Cette étape de réception est suivie par une étape P20 au cours de laquelle le pair 20b obtient la fonctionnalité F prédéterminée.

Dans le mode préféré de réalisation décrit ici, cette étape P20 d'obtention revient à télécharger la fonctionnalité F depuis un pair 30 du réseau Internet 5 faisant fonction de serveur de mise à jour logiciel ou depuis un pair hébergeant déjà ou en cours d'acquisition de cette fonctionnalité.

Après le téléchargement, le pair 20b met en oeuvre cette fonctionnalité (étape P30) et notifie, au cours d'une étape P40, par l'envoi d'un message FOK, un serveur central 40 de la mise en oeuvre de cette fonctionnalité.

Le pair 20b peut également notifier son super pair 10a pour l'informer de la mise en oeuvre de la nouvelle fonctionnalité.

Dans le mode préféré de réalisation décrit ici, ce serveur central 40, adapté à recevoir les messages FOK de notification en provenance des pairs du réseau, comporte en outre des moyens d'envoi de la requête RD pour forcer un pair du réseau à mettre en oeuvre la fonctionnalité prédéterminée F.

Cette caractéristique permet d'assurer un calibrage statique du nombre de pairs mettant en oeuvre la fonctionnalité prédéterminée F.

Ainsi, après l'étape S30 d'envoi, par le super pair 10a, de la requête RD, trois pairs du réseau, à savoir les pairs 20d, 20e et 20b, sont actifs et mettent en oeuvre la fonctionnalité prédéterminée F.

Préférentiellement, cette étape S30 d'envoi de requête est suivie par une étape S35, au cours de laquelle le super pair 10a obtient la charge de ces pairs 20d, 20e, 20b.

En pratique, cette étape S35 d'obtention de charge se fait par l'envoi d'une requête RC envoyée par chacun des super pairs 10a, 10b à destination de ses propres pairs.

Cette étape S35 d'obtention de charge est suivie par une étape S40 au cours de laquelle le super pair 10a établit la liste des pairs actifs mettant en oeuvre cette fonctionnalité. Dans le mode préféré de réalisation, cette liste est établie selon un ordre permettant d'équilibrer la charge entre les pairs admissibles.

Puis, au cours d'une étape suivante S50, le super pair 10a envoie cette liste LF à tous ses pairs 20a, 20b.

Ainsi, chaque pair du réseau connaît, à chaque instant, la liste des pairs actifs mettant en oeuvre la fonctionnalité F. Conformément à l'invention, cette liste contient au moins un nombre minimum de pairs actifs, car, lorsque le nombre de pairs actifs devient inférieur à un seuil prédéterminé, les super pairs 10a, 10b du réseau, ou le serveur central 40, obligent l'un des pairs à mettre en oeuvre cette fonctionnalité.

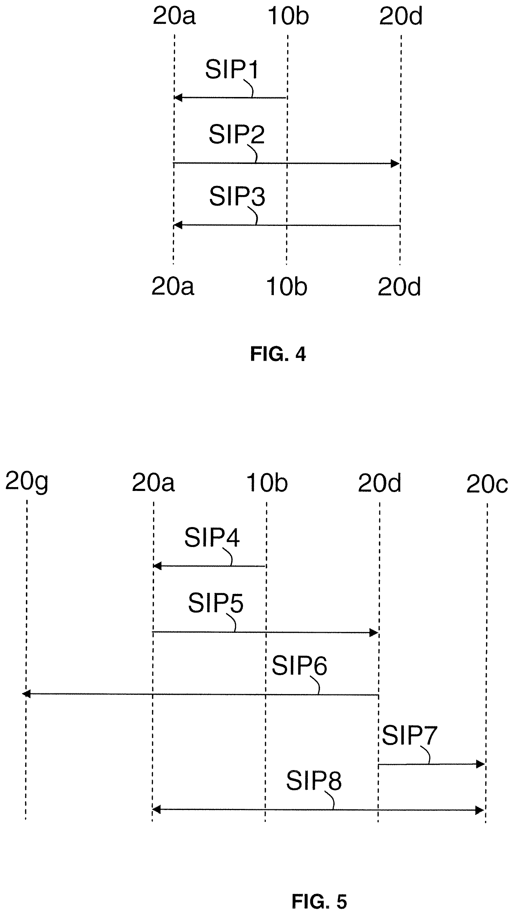

Cette invention peut notamment être utilisée dans le contexte du protocole SIP, comme décrit maintenant en référence à la **figure 4****.**

Ainsi, en supposant que le pair 20a est un client SIP, et que la fonction prédéterminée est la fonction registrar de ce protocole, on comprend qu'à tout moment le client SIP connaît la liste d'adresses de serveurs de registrar.

L'envoi de la list LF, par le super pair 10b, au pair 20a, est matérialisé par la flèche SIP1 de la figure 4.

Une fois cette liste obtenue, et de façon connue dans le protocole SIP, le client SIP 20a peut contacter le client SIP 20d en tête de la liste, pour effectuer une requête SIP2 classique d'enregistrement vers ce serveur de registrar, selon une communication pair à pair classique.

De façon connue, le serveur registrar 20d enregistre l'adresse du client SIP 20a et acquitte cet enregistrement (flèche SIP 3).

De façon connue, dans le monde SIP, l'enregistrement SIP2 et son acquittement SIP3 sont renouvelés périodiquement à l'initiative du client 20a pour maintenir son information de présence dans le réseau.

Lors de l'échec d'une transaction, plusieurs ré-émissions sont tentées puis, si l'échec persiste, le serveur registrar 20d est considéré comme hors service.

On tente alors une nouvelle transaction avec l'adresse suivante dans la liste LF des serveurs registrar fournie par le super pair 10b.

Cette liste est préférentiellement conservée en cache sur chaque pair 20a.

Si toutes les adresses de la liste s'avèrent non valides, une nouvelle requête de récupération d'adresses vers le super pair 10a du client 20a est relancée.

L'invention peut aussi être utilisée pour mettre en oeuvre la fonction proxy du protocole SIP.

En référence à la **figure 5****,** on considère qu'un client SIP 20a a obtenu (flèche SIP4) une liste d'adresses LF de pairs hébergeant la fonction proxy selon la méthode précédemment décrite.

Bien entendu, cette obtention n'est pas forcément synchrone avec la génération d'un appel.

Le client SIP 20a voulant établir une communication vers un autre client 20c, envoie une requête INVITE (matérialisée par la flèche SIP5) à l'un des proxy 20d de la liste LF.

Le proxy 20d contacte alors un location serveur 20g sur le réseau (flèche SIP6) pour trouver l'association entre un identifiant du client SIP destinataire 20c et son adresse physique dans le réseau.

Ensuite, le proxy SIP 20d permet la communication entre les clients SIP 20a et 20c.

Dans un exemple en mode relais, non limitatif, le proxy SIP 20d envoie (flèche SIP7) un message au client SIP 20c destinataire pour le notifier de la tentative d'appel du client SIP 20a.

Puis, une fois la communication établie par le proxy SIP 20d, il n'intervient plus dans la transaction SIP 8 entre les clients SIP 20a et 20c.

En variante, il peut se placer en coupure entre les clients SIP 20a et 20c.

L'invention peut également être utilisée dans le cadre du protocole H323.

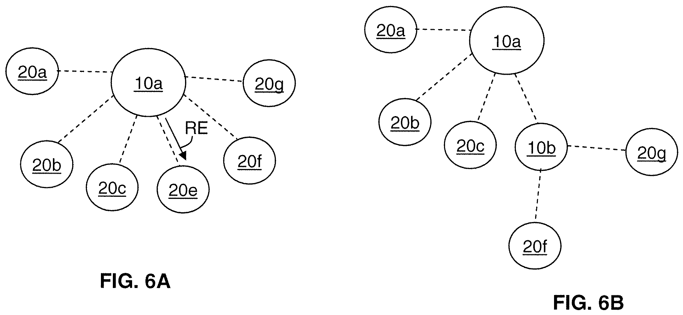

En référence aux **figures 6A et 6B****,** nous allons maintenant décrire une caractéristique avantageuse de répartition de charge pouvant être mise en oeuvre par le super pair 10a conforme à l'invention.

De façon connue, lorsqu'un pair 20g souhaite se connecter au super pair 10a, il lui envoie une requête de connexion.

Si le super pair 10a possède des ressources disponibles, la connexion est établie entre le super pair 10a et le pair 20g (figure 6A).

Dans le cas contraire, le super pair 10a envoie un nombre prédéfini d'adresses d'autres super pairs du réseau au pair 20g.

Si l'un de ces super pairs possède des ressources, une connexion peut être établie entre ce super pair et le pair 20g.

En revanche, si aucune connexion n'est possible, le pair 10a accepte temporairement la connexion du pair 20g. Il envoie ensuite une requête d'élection RE à ses pairs 20a à 20f afin de savoir si ceux-ci sont éligibles en super pairs.

Si aucun de ces pairs 20a à 20f n'est éligible, il propage cette requête d'élection RE à ses super pairs voisins.

En revanche, si l'un de ces pairs est éligible, par exemple le pair 10b, le super pair 10a envoie à ce pair, un ordre de passage en super pair.

Le pair 10b change donc d'état et garde sa connexion avec son super pair 10a.

Le super pair 10a ordonne ensuite à un certain nombre de ses pairs, par exemple les pairs 20f et 20g, de se connecter au super pair 10b nouvellement créé.

Ce mécanisme permet avantageusement de répartir la charge au sein du réseau de pairs (figure 6B).

## Revendications

1. Dispositif (10a) pouvant être utilisé, dans un réseau (5) pair à pair hybride, en tant que super pair pour au moins un pair (20a) constitué par une passerelle résidentielle d'accès au réseau Internet, comportant :
- des moyens pour identifier les pairs actifs (20d, 20e) dudit réseau mettant en oeuvre une fonctionnalité (F) prédéterminée ;
- des moyens d'envoi, à destination d'un pair (20b) dudit réseau, d'une requête (RD) pour demander audit pair (20b) de mettre en oeuvre ladite fonctionnalité (F) ;
- des moyens d'établissement d'une liste de pairs actifs mettant en oeuvre ladite fonctionnalité (F) ; et
- des moyens d'envoi de ladite liste (LF) à son dit au moins un pair (20a),
ledit super pair étant configuré pour forcer lesdits pairs du réseau à mettre en oeuvre ladite fonctionnalité de façon à garantir statistiquement qu'à tout moment au moins un nombre minimum de pairs mettent en oeuvre ladite fonctionnalité.

2. Dispositif selon la revendication 1, **caractérisé en ce que** lesdits moyens d'identification desdits pairs actifs (20d, 20e) comportent des moyens pour interroger les autres super pairs (10b) dudit réseau avec une profondeur croissante.

3. Dispositif selon la revendication 1 ou 2, **caractérisé en ce qu'**il est comporte des moyens (RC) d'obtention de la charge des pairs (20c, 20d) mettant en oeuvre ladite fonctionnalité et des moyens pour ordonner ladite liste (LF) selon un ordre permettant d'équilibrer la charge entre ces pairs.

4. Dispositif selon l'une quelconque des revendications 1 à 3, **caractérisé en ce qu'**il comporte :
- des moyens d'envoi, à destination d'au moins un de ses pairs (20e), d'une requête (RE) d'élection en super pair (10b) ; et
- des moyens pour demander, à au moins un de ses pairs (20f, 20g), de se connecter auprès du super pair (10b) ainsi élu.

5. Dispositif selon l'une quelconque des revendications 1 à 4, **caractérisé en ce que** ladite fonctionnalité est une fonction de téléphonie SIP registrar ou une fonction proxy SIP.

6. Passerelle résidentielle (20b) pouvant être utilisé en tant que pair dans un réseau (5) pair à pair hybride comportant :
- des moyens d'obtention d'une fonctionnalité (F) prédéterminée sur réception d'une requête (RD) ; et
- la dite passerelle étant configurée pour pouvoir être forcée par un dispositif super-pair dudit réseau, selon la revendication 1, à mettre en oeuvre ladite fonctionnalité (F) au service des pairs (10, 20) dudit réseau.

7. Passerelle résidentielle selon selon la revendication 6, **caractérisé en ce qu'**elle comporte des moyens (FOK) de notification, à un serveur central ou à un super pair, de sa mise en oeuvre de la fonctionnalité.

8. Passerelle résidentielle selon la revendication 6 ou 7, caractérisé en ce quelle comporte des moyens d'envoi à destination de son super pair, d'un message représentatif de sa charge de calcul.

9. Passerelle résidentielle selon l'une quelconque des revendications 6 à 8, **caractérisé en ce que** ladite fonctionnalité est une fonction de téléphonie SIP registrar ou une fonction proxy SIP.

10. Procédé de mise en relation pouvant être mis en oeuvre par un super pair (10a) dans un réseau (5) pair à pair hybride, comportant :
- une étape (S10, S20) d'identification des pairs actifs (20d, 20e) dudit réseau (5) offrant une fonctionnalité prédéterminée, lesdits pairs étant constitués par des passerelles résidentielles d'accès au réseau Internet ;
- une étape (S30) d'envoi, à destination d'un pair (20b) dudit réseau, d'une requête (RD) pour lui demander de mettre en oeuvre ladite fonctionnalité (F) ;
- une étape (S40) d'établissement d'une liste (LF) de pairs 10 actifs mettant en oeuvre ladite fonctionnalité (F) ; et
- une étape (S50) d'envoi de ladite liste à au moins un de ses pairs (20a),
ledit super pair étant configuré pour forcer lesdits pairs du réseau à mettre en oeuvre ladite fonctionnalité de façon à garantir statistiquement qu'à tout moment au moins un nombre minimum de pairs mettent en oeuvre ladite fonctionnalité.

11. Procédé de mise en relation selon la revendication 10, **caractérisé en ce que** ladite fonctionnalité une fonction de téléphonie SIP registrar ou une fonction proxy SIP.

12. Programme d'ordinateur stocké sur un support d'informations, ledit programme comportant des instructions permettant la mise en oeuvre d'un procédé de mise en relation selon la revendication 10 ou 11, lorsque ce programme est chargé et exécuté par un système informatique (10a, 10b).

13. Support d'informations lisible par un dispositif utilisé comme super pair dans un réseau de pairs, **caractérisé en ce qu'**il comporte des instructions d'un programme d'ordinateur selon la revendication 10 ou 11.

## Patentansprüche

1. Vorrichtung (10a), die in einem Hybrid-Pair-to-Pair-Netzwerk (5) als Superpair für mindestens einen Pair (20a), der von einem Kabelzugangsmodem zum Internet gebildet ist, verwendet werden kann, umfassend:
- Mittel, um die aktiven Pairs (20d, 20e) des Netzwerks zu identifizieren, die eine vorbestimmte Funktionalität (F) einsetzen;
- Mittel zum Senden in Richtung eines Pairs (20b) des Netzwerks einer Anfrage (RD), um den Pair (20b) aufzufordern, die Funktionalität (F) einzusetzen;
- Mittel zur Erstellung einer Liste von aktiven Pairs, die die Funktionalität (F) einsetze; und
- Mittel zum Senden der Liste (LF) an ihren mindestens einen Pair (20a),
wobei der Superpair konfiguriert ist, um die Pairs des Netzwerks dazu zu veranlassen, die Funktionalität einzusetzen, um statistisch zu garantieren, dass zu jedem Zeitpunkt mindestens eine Mindestanzahl von Pairs die Funktionalität einsetzt.

2. Vorrichtung nach Anspruch 1, **dadurch gekennzeichnet, dass** die Identifizierungsmittel der aktiven Pairs (20d, 20e) Mittel umfassen, um die anderen Superpairs (10b) des Netzwerks mit einer zunehmenden Tiefe abzufragen.

3. Vorrichtung nach Anspruch 1 oder 2, **dadurch gekennzeichnet, dass** sie Mittel (RC) zur Erfassung der Last der Pairs (20c, 20d), die die Funktionalität einsetzen, und Mittel, um die Liste (LF) in einer Reihenfolge, die es ermöglicht, die Last zwischen diesen Pairs auszugleichen, zu ordnen, umfasst.

4. Vorrichtung nach einem der Ansprüche 1 bis 3, **dadurch gekennzeichnet, dass** sie umfasst:
- Mittel zum Senden in Richtung mindestens einer ihrer Pairs (20e) einer Anfrage (RE) zur Auswahl als Superpair (10b); und
- Mittel, um mindestens einen ihrer Pairs (20f, 20g) zu beauftragen, sich an den so ausgewählten Superpair (10b) anzuschließen.

5. Vorrichtung nach einem der Ansprüche 1 bis 4, **dadurch gekennzeichnet, dass** die Funktionalität eine Telephonie SIP Registrar Funktion oder eine Proxy SIP Funktion ist.

6. Kabelmodem (20b), das als Pair in einem Hybrid-Pair-to-Pair-Netzwerk (5) verwendet werden kann, umfassend:
- Mittel zur Erfassung einer vorbestimmten Funktionalität (F) bei Erhalt einer Anfrage (RD); und
- wobei das Kabelmodul konfiguriert ist, um von einer Superpair-Vorrichtung des Netzwerks nach Anspruch 1 veranlasst zu werden, die Funktionalität (F) im Dienste der Pairs (10, 20) des Netzwerks einzusetzen.

7. Kabelmodul nach Anspruch 6, **dadurch gekennzeichnet, dass** es Mittel (FOK) zur Mitteilung seines Einsatzes der Funktionalität an einem Zentralserver oder einen Superpair umfasst.

8. Kabelmodem nach Anspruch 6 oder 7, **dadurch gekennzeichnet, dass** es Mittel zum Senden in Richtung seines Superpairs einer für seine Rechenlast repräsentativen Nachricht umfasst.

9. Kabelmodem nach einem der Ansprüche 6 bis 8, **dadurch gekennzeichnet, dass** die Funktionalität eine Telephonie SIP Registrar Funktion oder eine Proxy SIP Funktion ist.

10. Verfahren zur Herstellung einer Beziehung, das von einem Superpair (10a) in einem Hybrid-Pair-to-Pair-Netzwerk (5) eingesetzt werden kann, umfassend:
- einen Schritt (S10, S20) der Identifikation der aktiven Pairs (20d, 20e) des Netzwerks (5), die eine vorbestimmte Funktionalität bieten, wobei die Pairs von Kabelzugangsmodems zum Internet gebildet sind;
- einen Schritt (S30) des Sendens in Richtung eins Pairs (20b) des Netzwerks einer Anfrage (RD), um ihn aufzufordern, die Funktionalität (F) einzusetzen;
- einen Schritt (S40) der Erstellung einer Liste (LF) von aktiven Pairs 10, die die Funktionalität (F) einsetzen; und
- einen Schritt (S50) des Sendens der Liste an mindestens einen seiner Pairs (20a),
wobei der Superpair konfiguriert ist, um die Pairs des Netzwerks zu veranlassen, die Funktionalität einzusetzen, um statistisch zu garantieren, dass zu jedem Zeitpunkt mindestens eine Mindestanzahl von Pairs die Funktionalität einsetzt.

11. Verfahren zur Herstellung einer Beziehung nach Anspruch 10, **dadurch gekennzeichnet, dass** die Funktionalität eine Telephonie SIP Registrar Funktion oder eine Proxy SIP Funktion ist.

12. Computerprogramm, das auf einem Informationsträger gespeichert ist, wobei das Programm Befehle umfasst, die den Einsatz eines Verfahrens zur Herstellung einer Beziehung nach Anspruch 10 oder 11 ermöglicht, wenn dieses Programm geladen ist und von einem Informatiksystem (10a, 10b) ausgeführt wird.

13. Informationsträger, der von einer Vorrichtung, die als Superpair in einem Pair-Netzwerk verwendet wird, lesbar ist, **dadurch gekennzeichnet, dass** er Befehle eines Computerprogramms nach Anspruch 10 oder 11 umfasst.

## Claims

1. Device (10a) able to be used, in a hybrid peer-to-peer network (5), as a super-peer for at least one peer (20a) formed by a home gateway for accessing the Internet, including:
- means for identifying the active peers (20d, 20e) of said network that are implementing a predetermined functionality (F);
- means for sending, to a peer (20b) of said network, a request (RD) so as to ask said peer (20b) to implement said functionality (F);
- means for establishing a list of active peers implementing said functionality (F); and
- means for sending said list (LF) to its said at least one peer (20a),
said super-peer being configured to force said peers of the network to implement said functionality so as to statistically guarantee that, at any time, at least a minimum number of peers are implementing said functionality.

2. Device according to Claim 1, **characterized in that** said means for identifying said active peers (20d, 20e) include means for interrogating the other super-peers (10b) of said network with increasing depth.

3. Device according to Claim 1 or 2, **characterized in that** it includes means (RC) for acquiring the load of the peers (20c, 20d) implementing said functionality and means for ordering said list (LF) in an order that makes it possible to balance the load between these peers.

4. Device according to any one of Claims 1 to 3, **characterized in that** it includes:
- means for sending, to at least one of its peers (20e), a request (RE) to elect a super-peer (10b); and
- means for asking at least one of its peers (20f, 20g) to connect to the super-peer (10b) thus elected.

5. Device according to any one of Claims 1 to 4, **characterized in that** said functionality is a SIP registrar telephony function or a SIP proxy function.

6. Home gateway (20b) able to be used as a peer in a hybrid peer-to-peer network (5) including:
- means for acquiring a predetermined functionality (F) upon receipt of a request (RD); and
- said gateway being configured so as to be able to be forced, by a super-peer device of said network, according to Claim 1, to implement said functionality (F) for the benefit of the peers (10, 20) of said network.

7. Home gateway according to Claim 6, **characterized in that** it includes means (FOK) for notifying a central server or a super-peer that it is implementing the functionality.

8. Home gateway according to Claim 6 or 7, **characterized in that** it includes means for sending a message representative of its computing load to its super-peer.

9. Home gateway according to any one of Claims 6 to 8, **characterized in that** said functionality is a SIP registrar telephony function or a SIP proxy function.

10. Connection method able to be implemented by a super-peer (10a) in a hybrid peer-to-peer network (5), including:
- a step (S10, S20) of identifying the active peers (20d, 20e) of said network (5) that are offering a predetermined functionality, said peers being formed by home gateways for accessing the Internet;
- a step (S30) of sending, to a peer (20b) of said network, a request (RD) so as to ask it to implement said functionality (F);
- a step (S40) of establishing a list (LF) of active peers 10 implementing said functionality (F); and
- a step (S50) of sending said list to at least one of its peers (20a),
said super-peer being configured to force said peers of the network to implement said functionality so as to statistically guarantee that, at any time, at least a minimum number of peers are implementing said functionality.

11. Connection method according to Claim 10, **characterized in that** said functionality is a SIP registrar telephony function or a SIP proxy function.

12. Computer program stored on an information carrier, said program including instructions for implementing a connection method according to Claim 10 or 11 when this program is loaded and executed by a computer system (10a, 10b).

13. Information carrier able to be read by a device used as a super peer in a peer network, **characterized in that** it includes instructions of a computer program according to Claim 10 or 11.
